# EUROPEAN PATENT SPECIFICATION

(11) **EP 2 783 927 B1**
(45) Date of publication and mention of the grant of the patent: **24.08.2016**
(21) Application number: 14154759.6
(22) Date of filing: 11.02.2014
(51) Int. Cl.: B60S 3/06

(54) **Mobile portal installation for washing and/or drying vehicles**
Bewegbares Portalwasch- und/oder Trocknungsvorrichtung für Fahrzeuge
Portique mobile de lavage et/ou séchage de véhicules

(30) Priority: 26.03.2013 IT TO20130244
(43) Date of publication of application: 01.10.2014
(73) Proprietor: Mix S.r.l., 15040 Occimiano (AL) (IT)
(72) Inventor: Gavotto, Carlo, 15034 Cellamonte (AL) (IT); Sesia, Carlo, 15040 Occimiano (AL) (IT)
(74) Representative: Robba, Pierpaolo

(56) References cited:
- EP-A1- 2 380 789
- DE-A1-102006 002 794
- JP-A- 2005 313 839
- US-A1- 2009 199 880

## Description

### Technical Field

The invention relates to a mobile portal installation for washing and/or drying vehicles.

### Background Art

Mobile portal installations for washing and/or drying vehicles are known in the art and usually comprise a bridge structure which is movable along parallel guides and to which washing and/or drying fixtures are associated. Such washing fixtures typically consist of a pair of vertical rotary brushes, a horizontal rotary brush, detergent spray nozzles and water spouts. Drying fixtures, instead, typically consist of a set of diffusers for forced air. A portal of the aforementioned kind is described for instance in EP 2 380 789.

The functioning of a mobile portal washing installation takes place by positioning the vehicle within the yard defined between the parallel guides secured to the ground and provided for moving the portal relative to the vehicle. This positioning step is usually carried out by the vehicle driver himself or, alternatively, by the personnel in charge with the installation. The vehicle is positioned within the yard in parallel to the guides and usually when the portal is at the distal end of the yard with respect to the side of entrance of the vehicle into the yard. Once the vehicle is properly positioned within the yard, the driver and any other passengers leave the vehicle and the portal is actuated for effecting washing of the vehicle while the latter stays within the yard, between the guides over which the portal runs upon its translation movement. The portal usually effects one or several forward travels and as many return travels between the distal end and the proximal end with respect to the side of entrance of the vehicle into the yard. At the end of the washing and/or drying operation the portal is usually again at the distal end, i.e. in the same position from where it started at the beginning of the washing operation, when the driver and the other passengers, if any, left the vehicle. In this same configuration, when the portal has now completely stopped, the driver and the other passengers, if any, can therefore step in the vehicle again.

JP 2005-313839 discloses a vehicle cleaning apparatus equipped with camera devices which recognize the vehicle projection also at night by means of first illuminating devices for illuminating the vehicle in image pick-up regions of the camera devices, and second illuminating devices for illuminating the floor surface in image pick-up regions of the camera devices and wherein the output of the floor surface illuminating devices is set larger than that of the car body illuminating devices.

The stepping in and out of the vehicle stationing in the washing yard are critical moments for people's safety and integrity. The yard where the vehicle is stationing may indeed be poorly lighted, for instance because of poor natural lighting available (for example in the evening or night hours), and also due to the presence of the portal itself, which can shade the light coming from external artificial or natural light sources. Furthermore, the floor of said yard, though provided with water drainage systems, is usually slippery, also because of the detergent used for washing the vehicle and of oily substances leaking from the vehicles that are being washed or separating from them.

For the aforesaid reasons in this field there is a strong need to avoid injuries, caused for instance by falls when stepping in and out of the vehicle, and more in general to make these operations safer and easier.

The object of the present invention is to provide a washing and/or drying installation which overcomes the drawbacks of the background art and is advantageously effective in making more safe and comfortable to step in and out of the vehicle stationing in the washing yard of the installation.

It is a further object of the present invention to provide an installation of the aforementioned kind that is economical for use.

### Summary of the Invention

The above and other objects are achieved by the mobile portal installation for washing and/or drying vehicles provided with a safety light for stepping in and out of the vehicle as claimed in the appended claims.

### Brief Description of the Drawings

The invention will now be described in a preferred embodiment given as a non-limiting example with reference to the accompanying drawings, in which:
- Figure 1 is a perspective view of the installation according to the invention;
- Figure 2 is a front view of the installation of Figure 1;
- Figure 3 is a top view of the installation of Figure 1.

### Description of a Preferred Embodiment

Referring now to the attached Figures, the installation according to the invention, referred to as a whole with numeral 11, comprises a stationing yard 13 for a vehicle 15 to be washed and/or dried, a pair of parallel guides 17a,17b arranged on the two sides of said yard 13 and a portal 19, movable along said guides 17a,17b. The yard 13 is defined between said guides 17a,17b and can comprise means 21 such as markings, signs or flanks that facilitate the correct positioning of the vehicle within the yard, in parallel to the guides 17a,17b and at the right distance from the portal 19. In the embodiment shown, the invention includes a pair of wheel-guiding flanks 21a,21b which enable correct alignment of the wheels of the right side and left side of the vehicle, respectively, by defining a corresponding abutment for the outer sides of the wheels.

The portal 19 further comprises a pair of parallel vertical uprights 23a,23b and usually a top horizontal crossbeam 23c. Washing and/or drying fixtures are also associated to the portal 19. According to the background art, the washing fixtures may include vertical rotary brushes, typically a pair of vertical rotary brushes 25a,25b, and a horizontal rotary brush 25c, spray nozzles and spouts for washing liquid and water, the latter being not shown. The drying fixtures may include diffusers, not shown, typically two vertical lateral diffusers associated to the uprights 23a,23b and one horizontal diffuser associated to the crossbeam 23c, from which a forced air flow outflows for drying the vehicle body. The portal 11 may further comprise the washing fixtures alone, or the drying fixtures alone, or both fixtures.

According to the invention at least one of said uprights 23a,23b comprises a lighting device 31 adapted to illuminate at least one portion 35a,35b of the floor 35 of said yard 13, adjacent to a corresponding one of said parallel guides 17a,17b.

Thanks to the provision of this lighting device 31, the floor portion occupied by the person while stepping in and out of the vehicle is advantageously illuminated, thus making these operations safe.

The invention is mainly directed to make it safe to step in and out of the vehicle for the driver of the vehicle. For this reason, according to the invention there is provided at least one lighting device 31 associated to the upright 23a,23b of the portal 19 which is on the same side as the vehicle exit and entrance side for the driver. However, as there exist on the market both left-hand drive vehicles and right-hand drive vehicles, and in order to extend the same safety level to all the passengers of the vehicle, it is preferable that both uprights 23a,23b of the portal 19 are equipped with a corresponding lighting device 31 of the kind mentioned above. Furthermore, for the same reason, it is also preferable that each lighting device 31 is adapted to illuminate a portion 35a,35b of the floor of said yard 13 large enough so as to illuminate the floor portion extending aside the front and rear doors of the vehicle, assuming that the vehicle has four doors and is properly positioned within the yard 13.

Thus, according to the invention said lighting device 31 preferably comprises a lamp 31a and a lamp 31b associated to the left upright 23a and to the right upright 23b, respectively, of the portal 19. Still according to a preferred embodiment of the invention, the lamps 31a,31b are further located in the "foot" of the upright at a height from the floor 35, i.e. from the base of the upright associated to the corresponding guide, of approximately 30-50 cm. The lamps 31a,31b are further integrated in the structure of the corresponding upright 23a,23b inside the covering 33 of the upright itself, so as to be protected against shocks and humidity. The covering 33 is therefore provided with a hole 27 for the passage of the light emitted by the lamp 32a,32b.

Still according to the invention, optionally there may be further provided a device suitable for keeping each lamp 31a,31b clean, so as to always ensure maximum lighting efficiency. According to a preferred embodiment this optional device comprises at least one nozzle, preferably at least two or four nozzles for each lamp 31a,31b, associated to a compressed air circuit and arranged around and close to the perimeter of the hole 27 provided for the lamp in the upright covering 33.

The washing and/or drying installation according to the invention further comprises means programmed for making the portal 19 perform a washing and/or drying cycle by exploiting the presence of the lighting device 31. Said means comprise an electronic control unit and are advantageously programmed for making the portal 19 perform the steps of switching on said lighting device 31 when the portal is located on the washing yard, in distal position with respect to the vehicle entrance side, and the installation is awaiting a new vehicle to enter or the present vehicle to leave the washing yard, and switching off said lighting device 31 when the portal 19 is moving.

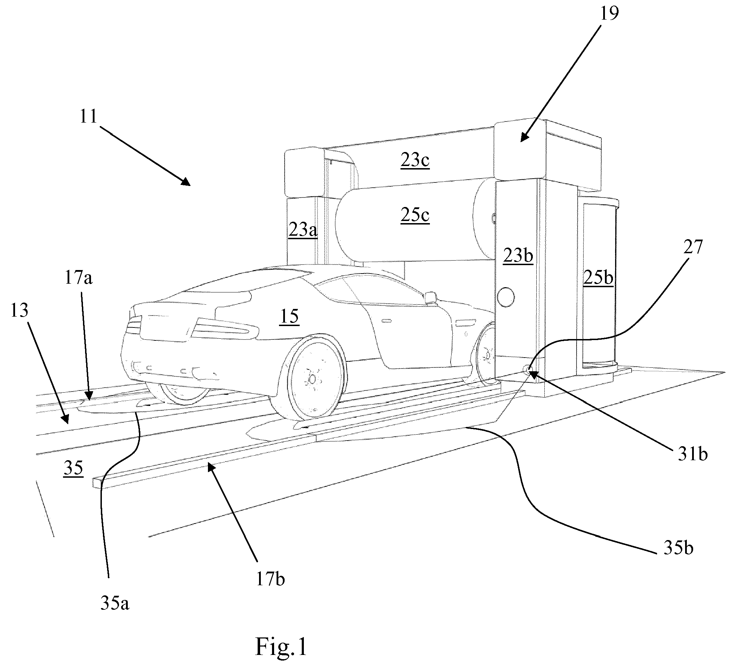

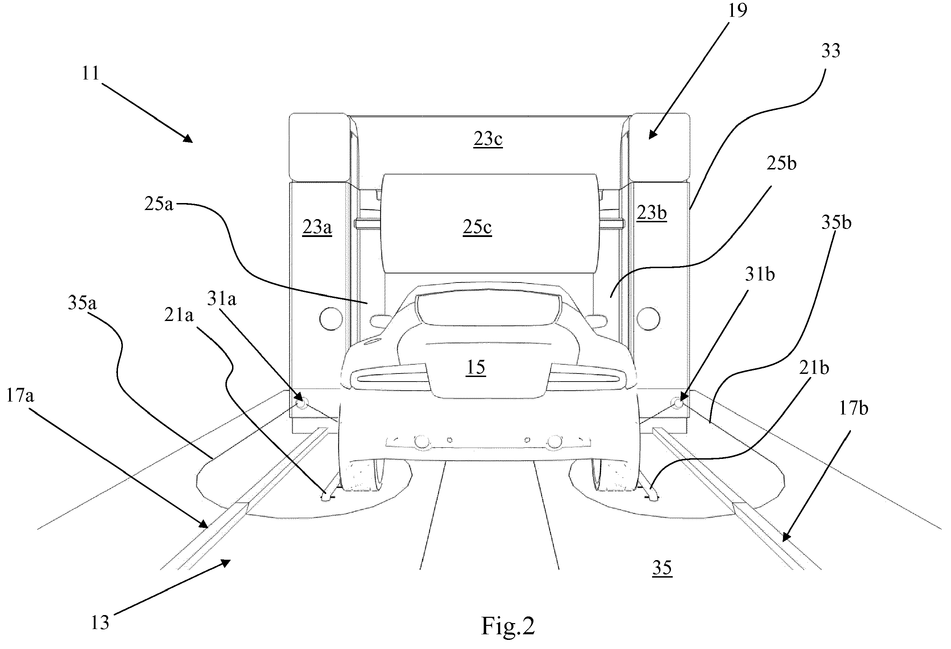

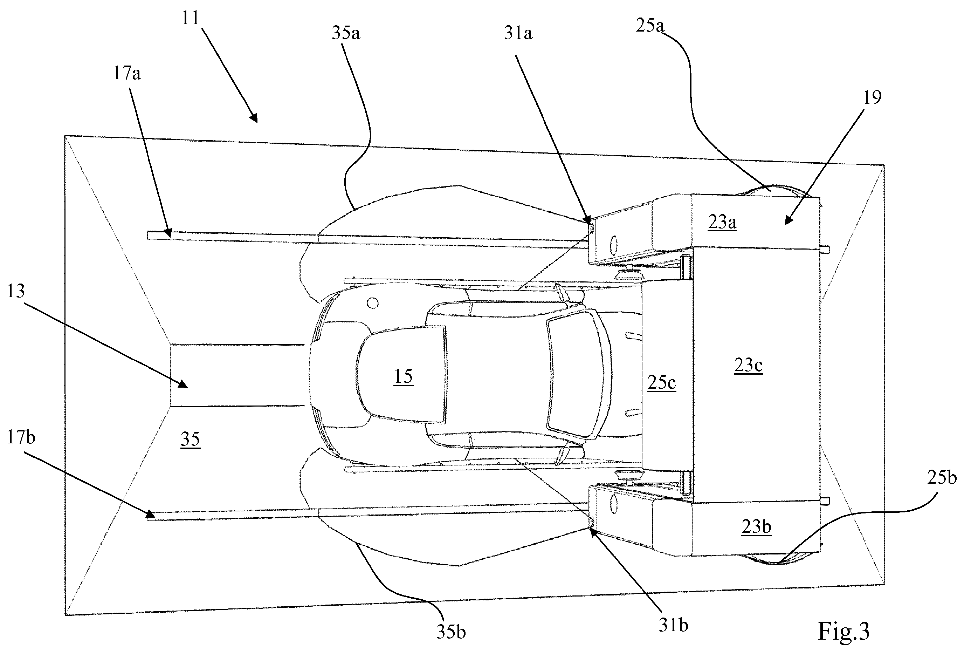

Preferably said means are programmed for performing the following working cycle of the installation:
- at first the portal 19 is positioned on the washing yard 13 in distal position with respect to the entrance side of the vehicle 15, which position is illustrated in Figures 1,2,3;
- a green light of the optional semaphore with which the installation 11 may be provided, or an equivalent signalling device, alerts the driver of the vehicle 15 that the installation is ready for receiving a new vehicle;
- the vehicle 15 is made to advance by the driver on the yard 13 and stopped in the correct position which can be indicated to the driver by means of visible references or for instance by the fact that the semaphore or the signalling device turns the light from green to red;
- the lighting device 31, preferably consisting of the lamp or lamps 31a,31b with which the portal 19 is equipped is switched on for illuminating the area 35a,35b of the floor 35 located at least at one of the front doors of the vehicle 15, typically the driver's door;
- the person(s) aboard the vehicle step(s) out of the vehicle in safety, as they can see the presence of obstacles attached to the floor 35, such as the wheel-guiding flanks 21a,21b for wheel alignment, the guides 17a,17b for the sliding of the portal 19 and also the possible presence of ice or other obstacles;
- the installation 11 then starts the washing and/or drying program by travelling along the guides 17a,17b and the device 31 is switched off;
- at the end of the washing and/or drying cycle the portal is again located in its starting position and the lighting device 31 is switched on;
- the semaphore, if provided, turns on the green light;
- when the vehicle 15 has left the yard 13 the lighting device 31 is switched off.

In addition, according to the invention the lighting device is preferably switched on only in poor natural lighting conditions and, for instance, is automatically switched at nightfall.

## Claims

1. Mobile portal installation (11) for washing and/or drying vehicles,
comprising:
- a yard (13) for a vehicle (15) to be washed and/or dried;
- a pair of parallel guides (17a,17b) arranged on the two sides of said yard (13);
- a portal (19) movable along said parallel guides (17a,17b) and provided with a pair of parallel vertical uprights (23a,23b), a top horizontal crossbeam (23c) and washing and/or drying fixtures (25), wherein both of said uprights (23a,23b) are equipped with a corresponding lighting device (31) adapted to illuminate at least one portion (35a,35b) of the floor (35) of said yard (13) adjacent to a corresponding one of said parallel guides (17a,17b),
**characterized in that** the installation is provided with safety lights for stepping in and out of the vehicle and **in that** said floor portion is corresponding to the floor portion occupied by the driver while stepping out of or in the vehicle which stands in the yard (13) before and after the washing and/or drying operation, and **in that** each lighting device (31) is adapted to illuminate the portion (35a,35b) of the floor (35) of said yard (13) extending aside the front and rear doors of the vehicle (15), when the vehicle has four doors and is properly positioned within the yard.

2. Installation according to claim 1, wherein said yard (13) comprises means (21a,21b) such as markings, signs or flanks that facilitate the correct positioning of the vehicle within the yard and wherein the portion (35a,35b) of the floor (35) illuminated by said at least one lighting device (31) extends at least between said means (21a,21b) and the adjacent guide (17a,17b).

3. Installation according to claim 2, wherein said means (21) comprise a flank (21a,21b) for abutment of the wheels of the same side of the vehicle.

4. Installation according to any of the preceding claims, wherein the washing and/or drying fixtures include a pair of vertical rotary brushes (25a,25b) and a horizontal rotary brush (25c), spray nozzles and spouts for washing liquid and water, and diffusers for forced air for drying the vehicle body.

5. Installation according to any of the preceding claims, wherein said lighting device (31) preferably comprises a lamp (31a,31b) associated to the left upright (23a) and/or to the right upright (23b) of the portal (19).

6. Installation according to claim 5, wherein the lamp (31a,31b) is located in the "foot" of the upright (23a,23b) at a height from the floor (35), i.e. from the base of the upright associated to the corresponding guide (17a,17b), of approximately 30-50 cm.

7. Installation according to claim 6, wherein the lamp (31a,31b) is further integrated in the structure of the corresponding upright (23a,23b) inside the covering (33) of the upright itself, so as to be protected against shocks and humidity, said upright being provided with a hole (27) for the passage of the light emitted by the lamp (31a,31b).

8. Installation according to claim 7, wherein there is provided a device suitable for keeping each lamp (31a,31b) clean, so as to always ensure maximum lighting efficiency, said device comprising at least one nozzle associated to a compressed air circuit.

9. Installation according to any of the preceding claims, wherein there are provided means programmed for making the portal (19) perform the following steps:
- switching on said lighting device (31) when the portal is located on the washing yard, in distal position with respect to the vehicle entrance side, and the installation is awaiting a new vehicle to enter or the present vehicle to leave the washing yard; and
- switching off said lighting device (31) when the portal (19) is moving.

## Patentansprüche

1. Bewegliche Portalanlage (11) zum Waschen und/oder Trocknen von Fahrzeugen, mit:
- einer Stellfläche (13) für ein zu waschendes oder zu trocknendes Fahrzeug (15);
- einem Paar von parallelen Führungen (17a, 17b), die auf zwei Seiten der Stellfläche (13) angeordnet sind;
- einem Portal (19), das entlang der parallelen Führungen (17a, 17b) beweglich ist und ein Paar parallele senkrechte Stützen (23a, 23b), einen oberen waagerechten Querträger (23c) sowie Wasch- und/oder Trockeneinbauten (25) aufweist, wobei beide Stützen (23a, 23b) mit einer entsprechenden Leuchteinrichtung (31) versehen sind, die dafür vorgesehen ist, zumindest einen Abschnitt (35a, 35b) des Bodens (35) der Standfläche (13) zu beleuchten, die an eine der beiden parallelen Führungen (17a, 17b) angrenzt,
**dadurch gekennzeichnet, dass**
die Anlage mit Sicherheitslichtern zum Ein- und Aussteigen aus dem Fahrzeug versehen ist und, dass
der Bodenabschnitt dem Bodenabschnitt entspricht, der von dem Fahrer belegt ist, während dieser in das Fahrzeug ein oder aus dem Fahrzeug aussteigt, das auf der Stellfläche (13) vor oder nach dem Waschen- und/oder Trocknungsvorgang steht, und dass
jede Leuchteinrichtung (31) dafür vorgesehen ist, den Abschnitt (35a, 35b) des Bodens (35) der Stellfläche (13) zu beleuchten, die sich neben den vorderen und hinteren Türen des Fahrzeugs (15) befindet, wenn das Fahrzeug vier Türen hat und korrekt auf der Stellfläche positioniert ist.

2. Anlage nach Anspruch 1, wobei die Stellfläche (13) Mittel (21) aufweist, wie Markierungen, Zeichen oder Flanken, die das korrekte Positionieren des Fahrzeugs auf der Stellfläche erleichtern, und wobei der Abschnitt (35a, 35b) des Bodens (35), der von der wenigstens einen Leuchteinrichtung (31) beleuchtet wird, sich zumindest zwischen den Mitteln (21 a, 21 b) und der angrenzenden Führung (17a, 17b) erstreckt.

3. Anlage nach Anspruch 2, wobei die Mittel (21) eine Flanke (21 a, 21 b) als Anschlag für die Räder auf derselben Seite des Fahrzeugs aufweisen.

4. Anlage nach einem der vorstehenden Ansprüche, wobei die Wasch- und/oder Trockeneinbauten ein Paar von senkrechten rotierenden Bürsten (25a, 25b) und eine waagerechte rotierende Bürste (25b), Sprühdüsen und Ausgießer für Waschflüssigkeit sowie Wasser und Diffusoren für eingeblasene Luft zum Trocknen des Fahrzeugkörpers enthalten.

5. Anlage nach einem der vorstehenden Ansprüche, wobei die Leuchteinrichtung (31) vorzugsweise eine Lampe (31 a, 31 b) aufweist, die der linken Stütze (23a) und/oder der rechten Stütze (23b) des Portals (19) zugeordnet ist.

6. Anlage nach Anspruch 5, wobei die Lampe (31 a, 31 b) in dem "Fuß" der Stütze (23a, 23b) in einem Abstand von dem Boden (35a), d. h. von der Basis der Stütze zu der entsprechenden Führung (17a, 17b), von etwa 30 bis 50 cm angeordnet ist.

7. Anlage nach Anspruch 6, wobei die Lampe (31 a, 31 b) weiter in die Struktur der entsprechenden Stützen (23a, 23b) innerhalb des Überzugs (33) der Stützen selbst integriert ist, um dadurch vor Stößen und Feuchtigkeit geschützt zu sein, wobei die Stütze mit einem Loch (27) versehen ist, um das von der Lampe (31 a, 31 b) ausgesandte Licht durchzulassen.

8. Anlage nach Anspruch 7, wobei eine Vorrichtung vorgesehen ist, die dafür geeignet ist, jede Lampe (31 a, 31 b) sauber zu halten, so dass stets maximale Leuchteffizienz gewährleistet ist, wobei diese Vorrichtung wenigstens eine Düse aufweist, die mit einem Druckluftkreislauft verbunden ist.

9. Anlage nach einem der vorstehenden Ansprüche, wobei Mittel vorgesehen sind, die dafür programmiert sind, das Portal (19) die folgenden Schritte ausführen zu lassen:
- Einschalten der Leuchteinrichtung (31), wenn das Portal auf der Waschfläche in einer distalen Position in Bezug auf die Fahrzeugeintrittsseite angeordnet ist, und die Anlage darauf wartet, dass ein neues Fahrzeug ankommt oder das vorhandene Fahrzeug die Waschfläche verlässt; und
- Ausschalten der Leuchteinrichtung (31), wenn sich das Portal (19) bewegt.

## Revendications

1. Installation de portique mobile (11) permettant de laver et/ou de sécher des véhicules,
comprenant :
- une voie (13) pour un véhicule (15) à laver et/ou à sécher ;
- une paire de guides parallèles (17a, 17b) agencés des deux côtés de ladite voie (13) ;
- un portique (19) mobile le long desdits guides parallèles (17a, 17b) et pourvu d'une paire de montants verticaux parallèles (23a, 23b), d'une traverse horizontale supérieure (23c) et d'accessoires de lavage et/ou de séchage (25), dans laquelle lesdits montants (23a, 23b) sont tous deux équipés d'un dispositif d'éclairage correspondant (31) adapté pour illuminer au moins une portion (35a, 35b) du sol (35) de ladite voie (13) adjacente à un guide correspondant desdits guides parallèles (17a, 17b), **caractérisée en ce que** l'installation est pourvue de lumières de sécurité pour sortir du véhicule et y entrer et **en ce que** ladite portion de sol correspond à la portion de sol occupée par le conducteur lorsqu'il sort du véhicule qui se situe dans la voie (13) ou qu'il y entre avant et après l'opération de lavage et/ou de séchage, et **en ce que** chaque dispositif d'éclairage (31) est adapté pour illuminer la portion (35a, 35b) du sol (35) de ladite voie (13) s'étendant sur le côté des portières avant et arrière du véhicule (15), lorsque le véhicule a quatre portières et qu'il est correctement positionné à l'intérieur de la voie.

2. Installation selon la revendication 1, dans laquelle ladite voie (13) comprend des moyens (21a, 21b) tels que des inscriptions, des panneaux ou des flancs qui facilitent le positionnement correct du véhicule à l'intérieur de la voie et dans laquelle la portion (35a, 35b) du sol (35) illuminée par ledit au moins un dispositif d'éclairage (31) s'étend au moins entre lesdits moyens (21a, 21b) et le guide adjacent (17a, 17b).

3. Installation selon la revendication 2, dans laquelle lesdits moyens (21) comprennent un flanc (21a, 21b) pour que les roues du même côté du véhicule viennent buter.

4. Installation selon l'une quelconque des revendications précédentes, dans laquelle les accessoires de lavage et/ou de séchage incluent une paire de brosses rotatives verticales (25a, 25b) et une brosse rotative horizontale (25c), des buses de pulvérisation et des goulottes pour un liquide de lavage et de l'eau, et des diffuseurs destinés à de l'air forcé permettant de sécher la carrosserie du véhicule.

5. Installation selon l'une quelconque des revendications précédentes, dans laquelle ledit dispositif d'éclairage (31) comprend de préférence une lampe (31a, 31b) associée au montant gauche (23c) et/ou au montant droit (23b) du portique (19).

6. Installation selon la revendication 5, dans laquelle la lampe (31a, 31b) est située au « pied » du montant (23a, 23b) à une hauteur du sol (35), c'est-à-dire à partir de la base du montant associé au guide (17a, 17b) correspondant, d'approximativement 30 à 50 cm.

7. Installation selon la revendication 6, dans laquelle la lampe (31a, 31b) est en outre intégrée dans la structure du montant (23a, 23b) correspondant à l'intérieur du revêtement (33) du montant lui-même, de façon à être protégée contre des chocs et l'humidité, ledit montant étant pourvu d'un trou (27) pour le passage de la lumière émise par la lampe (31a, 31b).

8. Installation selon la revendication 7, dans laquelle il est prévu un dispositif approprié pour garder chaque lampe (31a, 31b) propre, de façon à toujours garantir une efficacité d'éclairage maximale, ledit dispositif comprenant au moins une buse associée à un circuit d'air comprimé.

9. Installation selon l'une quelconque des revendications précédentes, dans laquelle il est prévu des moyens programmés pour amener le portique (19) à réaliser les étapes suivantes :
- l'allumage dudit dispositif d'éclairage (31) lorsque le portique est situé sur la voie de lavage, dans une position distale par rapport au côté d'entrée du véhicule, et que l'installation attend l'entrée d'un nouveau véhicule ou le départ du véhicule actuel de la voie de lavage ; et
- l'extinction dudit dispositif d'éclairage (31) lorsque le portique (19) bouge.
